# EUROPEAN PATENT SPECIFICATION

(11) **EP 2 413 478 B1**
(45) Date of publication and mention of the grant of the patent: **22.11.2017**
(21) Application number: 10305829.3
(22) Date of filing: 27.07.2010
(51) Int. Cl.: H02K 3/50

(54) **Phase ring assembly**
Phasenringanordnung
Ensemble formant anneau de phase

(43) Date of publication of application: 01.02.2012
(73) Proprietor: General Electric Technology GmbH, 5400 Baden (CH)
(72) Inventor: Ast, Jean-Charles, 90000, BELFORT (FR); Zimmermann, Marc, 70200, SAINT-GERMAIN (FR)
(74) Representative: General Electric Technology GmbH

(56) References cited:
- EP-A1- 0 863 601
- EP-A1- 2 110 925
- EP-A2- 2 182 614
- DE-A1- 10 318 816
- US-A1- 2007 052 307

## Description

### TECHNICAL FIELD

The present invention relates to a phase ring assembly; in the following particular reference to a phase ring assembly of an electric generator is made, it is anyhow clear that the phase ring assembly in embodiments of the invention may also be used in different rotating electric machines.

### BACKGROUND OF THE INVENTION

Electric generators are known to comprise a stator provided with stator windings and a rotor also provided with rotor windings.

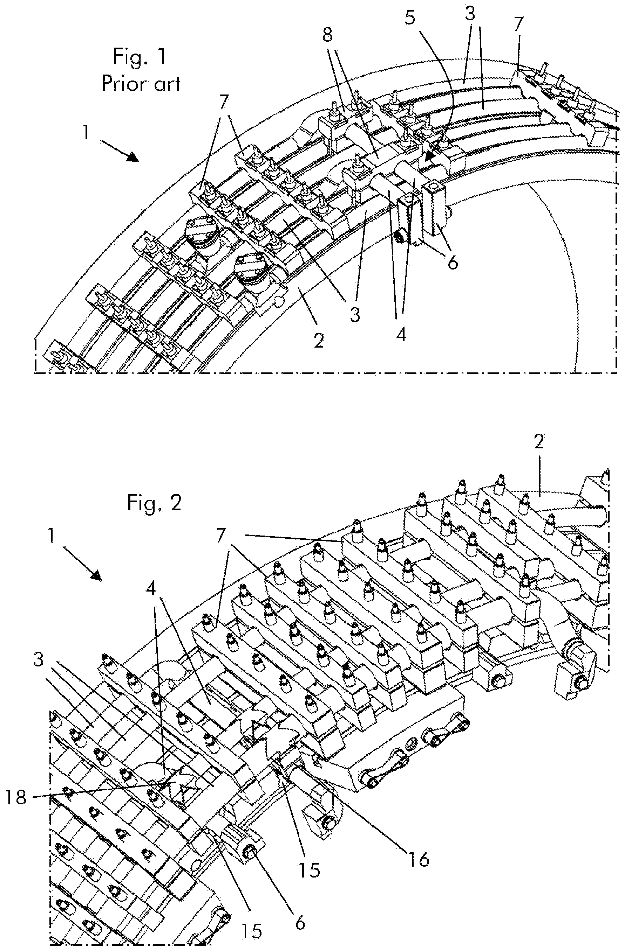

The stator windings are connected to a phase ring assembly 1 (figure 1) that comprises a support ring 2 that carries a plurality of phase rings 3; the phases of the electric generator are connected to the phase rings 3 in several parts.

In particular, the phase rings 3 have connection arms 4 that are typically bent to them and have their ends 5 projecting from a side of the support ring 2; these ends 5 are connected to the stator windings via connectors 6.

In order to overcome the phase rings 3, the connection arms 4 lay above the same phase rings 3, such that the support ring 2 carries the phase rings 3 (through clamping brackets 7) and, in addition, also the connection arms 4 (through clamping brackets 8) above the phase rings 3.

Nevertheless, the above-described traditional configuration requires the zone around the support ring 2 and phase rings 3 to be occupied by the connection arms 4 and their brackets 8, such that the space available for other components is substantially reduced; this could become a problem, since this part of the generator is usually very crowded.
Each of EP 0 863 601 B1, DE 103 18 816 A1 and EP 2 182 614 A2 discloses a phase ring assembly according to the pre-characterizing part of claim 1.

### SUMMARY OF THE INVENTION

The technical aim of the present invention is therefore to provide a phase ring assembly by which the said problems of the known art are eliminated.

Within the scope of this technical aim, an object of the invention is to provide a phase ring assembly by which usage of the space above the support ring of a phase ring assembly is reduced. This advantageously allows more space to be available on the support ring to include other design elements.

The technical aim is attained by providing a phase ring assembly in accordance with the invention as defined in the independent claim 1. Further embodiments are defined in the dependent claims 2 - 9. Advantageously, the phase ring assembly in embodiments of the invention allows an increased support ring thickness, such that stiffness is increased and possible vibrations are reduced.

In addition, the heating losses are also reduced, since the connection arms are not exposed to the gas circulating within the generator.

### BRIEF DESCRIPTION OF THE DRAWINGS

Further characteristics and advantages of the invention will be more apparent from the description of a preferred but non-exclusive embodiment of the phase ring, illustrated by way of non-limiting example in the accompanying drawings, in which:
Figure 1 is a schematic, perspective view of a portion of a phase ring according to the prior art; and
Figures 2 and 3 are a schematic, perspective view of a portion of a phase ring assembly in embodiments of the invention.

### DETAILED DESCRIPTION OF EMBODIMENTS OF THE INVENTION

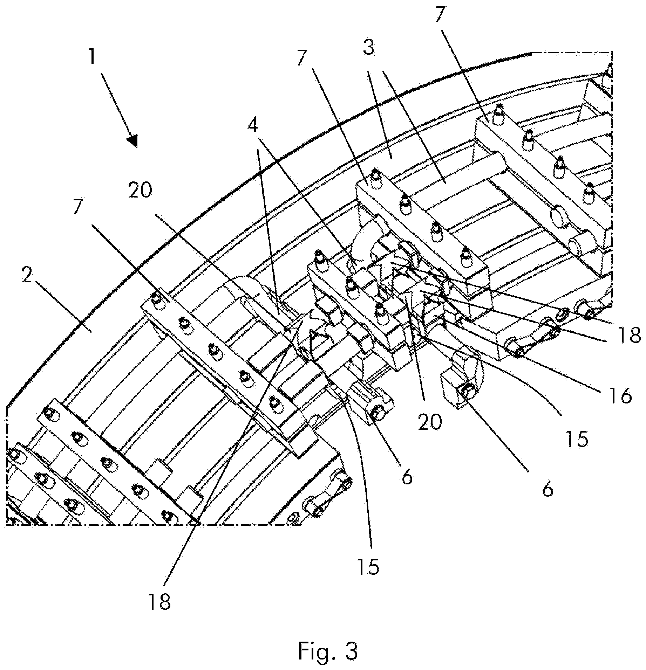

With reference to figures 2 and 3, these show a phase ring assembly 1 of an electric generator comprising a support ring 2 carrying a plurality of phase rings 3, having an annular sector shape, through clamping brackets 7.

The phase rings 3 are connectable to electric generator stator windings via connection arms 4 and connectors 6.

The connection arms 4 are bent, preferably at right angle (90 degree), to the phase rings 3 and project from it.

The connection arms 4 are placed between the phase rings 3 and the support ring 2 and, in this respect, the support ring 2 has recessed seats 15 housing the connection arms 4; as shown, in each recessed seat 15 only one connection arm 4 is housed.

As shown in the figure, the connection arms 4 and the recessed seats 15 extend perpendicularly to the phase rings 3.

The connection arms 4 are supported by one or more than one overlaying phase rings 3 (depending on their position and the zone configuration).

In particular, between the connection arms 4 and the phase rings 3 spacers 16 are provided having concave seats for housing respectively the connection arms 4 and the phase rings 3.

Also fixing elements, preferably comprising a tape 18, are provided to connect the connection arms 4 and the phase rings 3.

In addition, since the phase rings 3 do not run over the whole circumference, bars 20 are provided, laying parallel to the phase rings 3 and arranged to support the connection arms 4 in addition to or instead of the phase rings 3.

In particular the bars 20 (like the phase rings 3) have an annular sector shape and are supported by the clamping brackets 7 also supporting the phase rings 3.

Connection of the bars 20 to the connection arms 4 is the same as connection of the phase rings 3 to the connection arms 4 and in thus not explained in detail.

In practice the materials used and the dimensions can be chosen at will according to requirements and to the state of the art.

### REFERENCE NUMBERS

- 1: phase ring assembly
- 2: support ring
- 3: phase rings
- 4: connection arms
- 5: ends of 4
- 6: connectors
- 7: clamping brackets of 3
- 8: clamping brackets of 4
- 15: recessed seats of 2
- 16: spacer
- 18: tape
- 20: bars

## Claims

1. Phase ring assembly (1) comprising a support ring (2) carrying a plurality of phase rings (3) provided with connection arms (4) that are bent to the phase rings (3), wherein said connection arms (4) are placed between the phase rings (3) and the support ring (2), and the support ring (2) has recessed seats (15) housing said connection arms (4), **characterized in that** the phase rings (3) are supported by clamping brackets (7) on the cylindrical outer surface of the support ring (2), and **in that** the connection arms (4) are closer to a center of the support ring (2) than the phase ring (3).

2. Phase ring assembly (1) as claimed in claim 1, **characterised in that** the connection arms (4) and recessed seats (15) extend perpendicularly to the phase rings (3).

3. Phase ring assembly (1) as claimed in claim 1, **characterised in that** the connection arms (4) are supported by at least one of the overlaying phase rings (3).

4. Phase ring assembly (1) as claimed in claim 3, **characterised in that** between the connection arms (4) and the phase rings (3) spacers (16) are provided.

5. Phase ring assembly (1) as claimed in claim 4, **characterised in that** the spacers (16) have concave seats for housing respectively the connection arms (4) and the phase rings (3).

6. Phase ring assembly (1) as claimed in claim 3, **characterised in that** fixing elements (18) are provided to connect the connection arms (4) and the phase rings (3).

7. Phase ring assembly (1) as claimed in claim 6, **characterised in that** the fixing elements (18) comprise a tape.

8. Phase ring assembly (1) as claimed in claim 1, **characterised in that** in each recessed seat (15) only one connection arm (4) is housed.

9. Phase ring assembly (1) as claimed in claim 1, **characterised in that** the phase rings (3) have an annular sector shape.

## Patentansprüche

1. Phasenringanordnung (1), umfassend einen Stützring (2), der eine Mehrzahl von Phasenringen (3) trägt, die mit Verbindungsarmen (4) versehen sind, die zu den Phasenringen (3) gebogen sind, wobei die Verbindungsarme (4) zwischen den Phasenringen (3) und dem Stützring (2) angeordnet sind und der Stützring (2) vertiefte Aufnahmen (15) aufweist, welche die Verbindungsarme (4) aufnehmen, **dadurch gekennzeichnet, dass** die Phasenringe (3) von den Spannklemmen (7) auf der zylindrischen Außenfläche des Stützrings (2) gehalten werden und dass die Verbindungsarme (4) näher an einer Mitte des Stützrings (2) liegen als der Phasenring (3).

2. Phasenringanordnung (1) nach Anspruch 1, **dadurch gekennzeichnet, dass** die Verbindungsarme (4) und vertieften Aufnahmen (15) sich senkrecht zu den Phasenringen (3) erstrecken.

3. Phasenringanordnung (1) nach Anspruch 1, **dadurch gekennzeichnet, dass** die Verbindungsarme (4) von mindestens einem der überlagernden Phasenringe (3) gehalten werden.

4. Phasenringanordnung (1) nach Anspruch 3, **dadurch gekennzeichnet, dass** zwischen den Verbindungsarmen (4) und den Phasenringen (3) Abstandshalter (16) bereitgestellt werden.

5. Phasenringanordnung (1) nach Anspruch 4, **dadurch gekennzeichnet, dass** die Abstandshalter (16) konkave Aufnahmen zum jeweiligen Aufnehmen der Verbindungsarme (4) und der Phasenringe (3) aufweisen.

6. Phasenringanordnung (1) nach Anspruch 3, **dadurch gekennzeichnet, dass** Befestigungselemente (18) bereitgestellt werden, um die Verbindungsarme (4) und die Phasenringe (3) zu verbinden.

7. Phasenringanordnung (1) nach Anspruch 6, **dadurch gekennzeichnet, dass** die Befestigungselemente (18) ein Band umfassen.

8. Phasenringanordnung (1) nach Anspruch 1, **dadurch gekennzeichnet, dass** in jeder vertieften Aufnahme (15) nur ein Verbindungsarm (4) aufgenommen wird.

9. Phasenringanordnung (1) nach Anspruch 1, **dadurch gekennzeichnet, dass** die Phasenringe (3) die Form eines ringförmigen Sektors aufweisen.

## Revendications

1. Ensemble (1) formant anneau de phase comportant un anneau (2) de soutien portant une pluralité d'anneaux (3) de phase munis de bras (4) de liaison qui sont coudés vers les anneaux (3) de phase, lesdits bras (4) de liaison étant placés entre les anneaux (3) de phase et l'anneau (2) de soutien, et l'anneau (2) de soutien étant doté de sièges évidés (15) logeant lesdits bras (4) de liaison, **caractérisé en ce que** les anneaux (3) de phase sont soutenus par des étriers (7) de serrage sur la surface extérieure cylindrique de l'anneau (2) de soutien, et **en ce que** les bras (4) de liaison sont plus proches d'un centre de l'anneau (2) de soutien que l'anneau (3) de phase.

2. Ensemble (1) formant anneau de phase selon la revendication 1, **caractérisé en ce que** les bras (4) de liaison et les sièges évidés (15) s'étendent perpendiculairement aux anneaux (3) de phase.

3. Ensemble (1) formant anneau de phase selon la revendication 1, **caractérisé en ce que** les bras (4) de liaison sont soutenus par au moins un des anneaux (3) de phase sus-jacents.

4. Ensemble (1) formant anneau de phase selon la revendication 3, **caractérisé en ce que** des entretoises (16) sont placées entre les bras (4) de liaison et les anneaux (3) de phase.

5. Ensemble (1) formant anneau de phase selon la revendication 4, **caractérisé en ce que** les entretoises (16) sont dotées de sièges concaves servant à loger respectivement les bras (4) de liaison et les anneaux (3) de phase.

6. Ensemble (1) formant anneau de phase selon la revendication 3, **caractérisé en ce que** des éléments (18) de fixation sont mis en place pour relier les bras (4) de liaison et les anneaux (3) de phase.

7. Ensemble (1) formant anneau de phase selon la revendication 6, **caractérisé en ce que** les éléments (18) de fixation comportent un ruban.

8. Ensemble (1) formant anneau de phase selon la revendication 1, **caractérisé en ce qu'**un seul bras (4) de liaison est logé dans chaque siège évidé (15).

9. Ensemble (1) formant anneau de phase selon la revendication 1, **caractérisé en ce que** les anneaux (3) de phase présentent une forme en secteur annulaire.
